# EUROPEAN PATENT SPECIFICATION

(11) **EP 0 979 918 B1**
(45) Date of publication and mention of the grant of the patent: **12.01.2005**
(21) Application number: 99305211.7
(22) Date of filing: 01.07.1999
(51) Int. Cl.: E05F 15/00

(54) **Obstruction-responsive apparatus**
Gerät zur Feststellung von Hindernissen
Appareil de détection d'obstacles

(30) Priority: 07.08.1998 GB 9817286
(43) Date of publication of application: 16.02.2000
(73) Proprietor: GDX North America Inc., Dover Delaware 19901 (US)
(72) Inventor: Gertig, Frank, 51069 Köln (DE)
(74) Representative: Foster, David Martyn

(56) References cited:
- EP-A- 0 334 028
- EP-A- 0 638 701
- DE-A- 2 644 608
- DE-A- 3 206 466
- DE-A- 19 602 744

## Description

The invention relates to apparatus responsive to an obstruction in the path of movement of a slidable member, comprising first and second normally spaced-apart strips of electrically conductive resilient material, means for mounting the strips adjacent to the path such that an obstruction in the path is moved by the slidable member towards the conductive strips and causes them to be brought into contact at a corresponding point along their lengths, and control means operative to electrically sense such contact whereby to detect the obstruction and to produce a detection signal.

Such apparatus is shown, for example, in EP-A-0 638 701. It is desirable, however, to be able to detect any electrical discontinuity in either of the strips so as to give a warning that the apparatus is faulty.

Such apparatus is also shown in DE-A-19 602 744, this document also disclosing the provision of an elastomeric material or the like forming an electrical resistor interconnecting the two conductive strips.

The present invention is defined in claim 1.

Movable-window safety apparatus for interrupting the movement of a power-driven window in a motor vehicle, to prevent human injury, and embodying the invention, will now be described, by way of example only, with reference to the accompanying diagrammatic drawings in which:
Figure 1 is a diagrammatic side elevation of a motor vehicle;
Figure 2 is a diagrammatic cross-section on the line II-II of Figure 1;
Figure 3 is a block circuit diagram of the apparatus; and
Figure 4 shows part of the apparatus in more detail in cross-section.

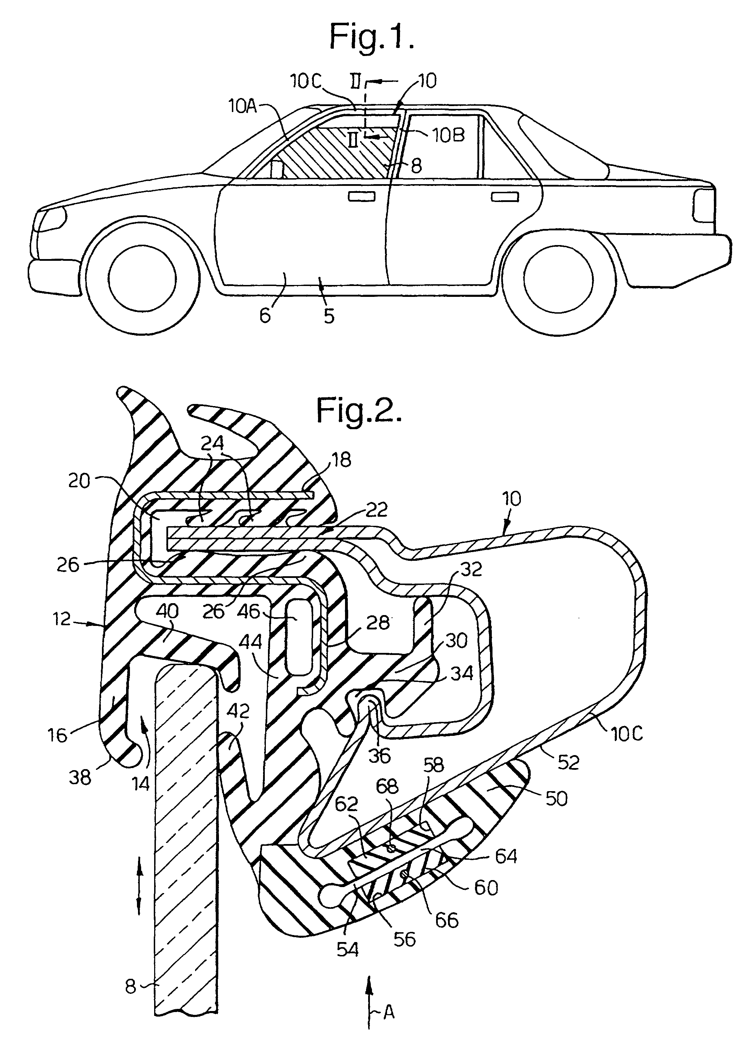

Figure 1 shows a motor vehicle 5 having a front door 6 with a power-driven window 8 which is shown cross-hatched for clarity. The power-driven window 8 is raised and lowered by means of a suitable motor, normally an electric motor, under the control of switches positioned within the vehicle for use by the drive or passenger. All or some of the other side windows in the vehicle may also be power-driven.

The window frame 10, forming part of the vehicle door 5, is, in this example, made of metal and comprises a portion 10A (Fig. 1) running adjacent to the "A" pillar of the vehicle body (when the door 6 is closed), a portion 10B running alongside the "B" pillar, and a portion 10C running along the top of the door. The window frame incorporates a window seal 12. The form which the seal 12 takes over the frame portions 10A and 10C is shown in Figure 2. As shown in Figure 2, the seal 12 is supported so that it provides a channel 14 into and out of which the window glass 8 slides as it is raised and lowered. As shown in Figure 2, the window channel strip 12 is made of extruded plastics or rubber material 16 and incorporates an embedded metal core or carrier 18.

The carrier 18 may take any suitable form. For example, it may comprise a simple channel of metal. The channel could additionally be formed with apertures to increase its flexibility. Instead, the carrier could be made from U-shaped metal elements arranged side-by-side to define the channel and either connected together by short flexible interconnecting links or entirely disconnected from each other. The metal could be steel or aluminium, for example.

Instead, the carrier could be made of metal wire looped to and fro to define the channel of the carrier.

However, other forms of carrier can be used instead.

The carrier 18 is preferably incorporated into the extruded material 16 by a known cross-head extrusion process.

As shown in Figure 2, the carrier 18 embraces a secondary channel 20 formed in the extruded material 16, and the material 16 forming the channel 20 embraces a flange 22 formed where the sheet material constituting the window frame 10 is bent over on itself and the two edges welded together. The extruded material is extruded to define lips 24 and shoulders 26 which make frictional contact with the sides of the flange 22 and, in conjunction with the resilience of the metal carrier 18, ensure that the window channel strip 12 is firmly fixed to the window frame 10. Advantageously, the extruded material forming the lips 24 and shoulders 26 is relatively soft and may be softer than the remainder of the extruded material. The softness of the material of the lips 24 and shoulders 26 helps to increase the force with which they grip the flange 22.

As shown in Figure 2, the carrier 18 advantageously has an integral extension 28 into part of the material defining one of the side walls of the window channel 14, to provide additional strengthening.

The extruded material 16 also defines a rib 30 having a projecting ridge 32 and a groove 34 which fits over a shoulder 36 formed in the material of the frame 10. The groove 34 and the shoulder 36 help to locate the window channel strip 12 in position in the window frame.

The window glass receiving channel 14 is defined by an outer wall portion 38 and has integral lips 40 and 42 for making contact with the edge and side of the window glass 8. The surfaces of the material 16 which make contact with the glass 8 are advantageously covered with flock or similar material to provide low mechanical resistance to movement of the glass and also good sealing.

The wall 44 of the window glass receiving channel 14 may be provided with a cavity 46 to increase the flexibility of the material defining the window channel.

The material 16 also defines a large lip 50 which is shaped to lie closely against the downwardly facing surface 52 of the window frame 10C. The lip 50 is made of electrially insulating material. If the extruded material 16 is electrically insulating, then the lip 50 can be of the same type of material as the rest of the material. If the material 16 is not a good electrical insulator, the material of the lip 50 will be arranged to be different so as to have sufficient electrically insulating properties. Normally, though, the material of the lip 50 would be co-extruded with the remainder of the material 16.

The material of the lip 50 is extruded so as to define an interior cavity indicated generally at 54. This cavity provides two recesses 56 and 58 which are each generally rectangular in cross-section and extend longitudinally along the length of the lip 50 (which itself extends along the portions 10A and 10C of the window frame).

In each of the recesses 56 and 58, a strip of electrically conductive resilient material (rubber for preference) 60,62 is mounted so as to be a secure fit. For example, the strips 60,62 may be secured in position by means of adhesive. Instead, however, they can be co-extruded with the remainder of the material 16 and of the lip 50. The strips of material 60,62 are sized to provide a gap or chamber 64 between them and extending within the cavity 54.

Electrically conductive wires 66,68 are respectively embedded within the strips 60,62 of electrically conductive material. These wires extend for substantially the full length of the strips 60,62. These may be incorporated during the extrusion process described above.

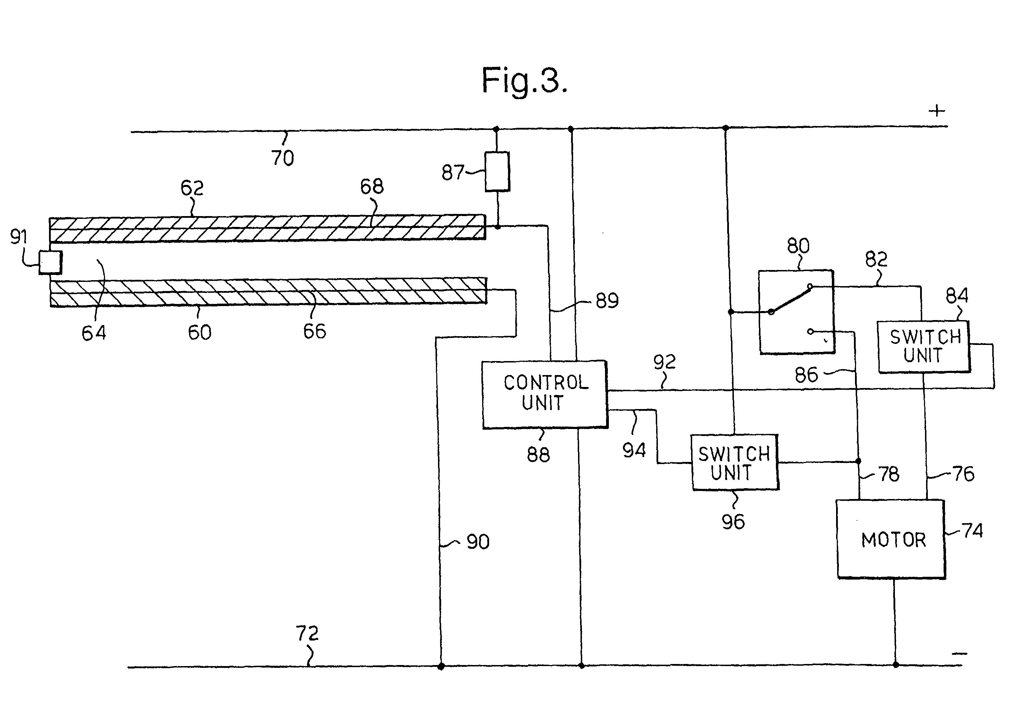

Figure 3 shows a schematic circuit diagram of one form of the system.

Figure 3 shows positive and negative supply lines 70 and 72 of the vehicle's electrical supply and which are energised by the vehicle's battery (not shown). As shown in Figure 3, electric motor 74 is provided for raising and lowering the window glass 8. The motor has a supply line 76 which is energised to drive the motor in a window-raising direction and a supply line 78 which is energised to drive the motor in a window-lowering direction.

Lines 76 and 78 are energised from the positive supply line 70 by means of a driver or passenger operated manual switch 80. When switch 80 is set in a raising direction, an output 82 is energised and in turn energises line 76 through a normally closed switching unit 84, and the window is raised by the motor. When switch 80 is set in the lowering direction, an output 86 is energised which is directly connected to line 78, and the window glass is lowered by the motor.

Figure 3 diagrammatically shows the strips of conductive rubber 60 and 62 (Fig. 2) which are separated by the gap 64 of the cavity 54. The embedded electrically conductive wires 66 and 68 are also shown. As indicated in Figure 3, wire 68 is connected to the positive supply line 70 through a resistor 87. The junction between resistor 87 and one end of wire 68 is connected to a control unit 88 by a line 89, the control unit also being itself connected to the positive and negative supply rails 70,72 for energisation thereby. One end of wire 66 is connected to the negative supply line 72 by a line 90. A resistor 91 is connected to the opposite ends of the wires 66,68.

Resistors 87 and 91 have high values. In the situation illustrated in Figure 3, with the conductive strips 60,62 separated, a small current flows through these resistors and through the conductive rubber strips 60, 62 and the embedded wires 66 and 68.

When any object (such as any part of the human body) comes between the upper part of the frame of the window and the closing window glass, it will be carried upwardly by the rising window glass and will apply a force in the direction of the arrow A to the downwardly facing surface of the lip 50 (Figure 2). This force will flex the material of the lip 50, thus moving the conductive strips 60,62 into contact with each other at a point corresponding to the position of the object. Resistor 91 will therefore be short-circuited and the voltage on line 89 will fall substantially. This fall in voltage will be detected by the control unit 88 which produces a control output on a line 92 which open-circuits the switching unit 84. Motor 74 therefore stops (even though switch 80 is set in the widow-raising setting).

In addition, the control unit 88 may energise a line 94 which closes a second switching unit 96. This energises line 78 to drive the motor 74 in the window-lowering direction (thus releasing the trapped object).

If the material of the strips 60,62 has a very low electrical resistance (comparable with the minimum resistance of conductive wires), the wires 66 and 68 can be omitted. In that case, the electrical connections to the wires 66,68 as shown in Figure 3 would instead be made directly to the conductive strips.

If for any reason a fault should develop in either of the conductive strips 60,62 or the wires 66,68 so as to cause an electrical discontinuity therealong, the current path through resistor 91 will no longer exist. The voltage on line 89 will therefore rise to the voltage of the positive supply line 70. This will be detected by the control unit 88 which will therefore signal a fault. In these circumstances, the control unit may operate to disconnect the motor 74 so that power-driven operation of the window is no longer possible, until the fault is rectified.

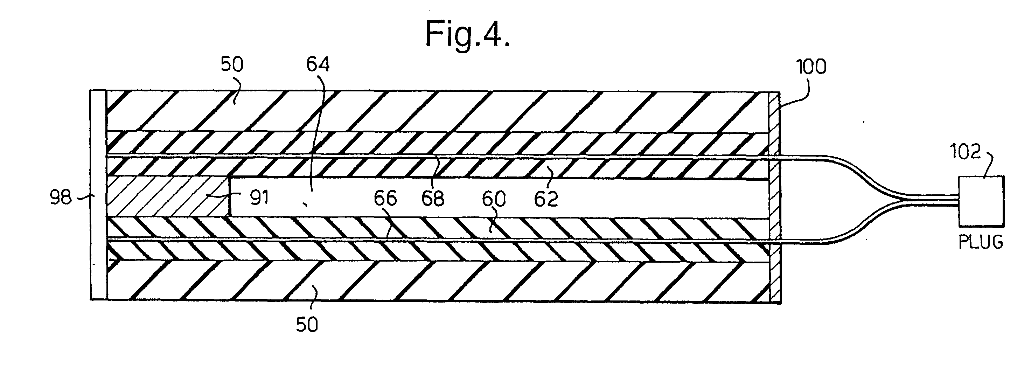

Figure 4 shows how the two conductive strips 60,62 with their embedded wires 66,68, can be produced as a unit, together with the resistor 91. The resistor 91 is formed from rubber or other elastomeric material which is treated so as to have the required electrical resistance, such as by incorporating conductive material, in the form of conductive particles for example. The electrical resistance of the material can be adjusted to the desired value by altering its length and/or geometry, as well, of course, as by adjusting the specific resistance of the material. The rubber forming the resistor 91 is secured in position by injection, by adhesive (using electrially conductive adhesive) or by clamping or in any other suitable way. Adjustments to the value of the resistor 91 can be made after fitting the resistor in position, by grinding the material of the resistor. As shown in Figure 4, the opposite ends of the chamber 64 are closed off by non-conductive end caps 98,100. A plug 102 is used to make the connections to the remainder of the circuitry.

The use of treated elastomeric material to form the resistor 91 is advantageous because it can be secured in position very simply in the ways described, and thus eliminates the need for a difficult and uneconomic soldering operation if a wired resistor is used.

## Claims

1. Apparatus responsive to an obstruction in the path of movement of a slidable member (8), comprising first and second normally spaced-apart strips (60,62) of electrically conductive resilient material forming a chamber (64) therebetween, electrically insulating material means (50) for mounting the strips (60,62) adjacent to the path such that an obstruction in the path is moved by the slidable member (8) towards the conductive strips (60,62) and causes them to be brought into contact at a corresponding point along their lengths; control means (88) operative to electrically sense such contact whereby to detect the obstruction and to produce a detection signal; electrical resistance means (91) in the chamber (64) interconnecting the two electrically conductive strips (60,62) at a predetermined position whereby to allow a predetermined electrical current to flow through the strips (60,62) when they are separated so that occurrence of an electrical discontinuity in either of the strips (60,62) interrupts this current to produce a fault signal, the electrical resistance means comprising treated elastomeric material (91); and **characterised in that** the opposite ends of said chamber (64), are closed off by non-conductive end caps (98, 100).

2. Apparatus according to claim 1, **characterised in that** the conductive strips (60,62) comprise treated elastomeric material.

3. Apparatus according to claim 2, **characterised in that** each of the conductive strips (60,62) includes a respective electrical conductor (66,68) of substantially zero electrical resistance embedded in the treated elastomeric material of the strips (60,62).

4. Apparatus according to claim 3, **characterised in that** each electrical conductor comprises a conductive metal wire (66,68).

5. Apparatus according to any preceding claim, **characterised in that** the strips (60,62) of the electrically conductive resilient material are mounted spaced apart with a predetermined space between them, and the treated elastomeric material of the electrical resistance means (91) is mounted between them and in electrical contact with each of them at one end of the space.

6. Apparatus according to claim 5, **characterised in that** the treated elastomeric material of the electrical resistance means (91) is secured in position by electrically conductive adhesive.

7. Apparatus according to claim 5 or 6, **characterised in that** the treated elastomeric material of the electrical resistance means (91) is produced by injection into the space between the conductive strips (60,62).

8. Apparatus according to any one of claims 1 to 4, **characterised in that** the first and second strips (60,62) are mounted parallel to each other and side-by-side, and with the electrical resistance means (91) interconnecting a first end of the first strip (60) to a first end of the second strip (66), and by second electrical resistance means (87) connected to the second end of the first strip (62) so that an electrical potential difference applied to the second ends of the strips (60,62) through the second electrical resistance means (87) feeds the predetermined electrical current through the strips (60,62) when they are separated whereby interruption of the current by a said electrical discontinuity causes a change in the electrical potential difference between the second ends of the strips to produce the fault signal.

9. Apparatus according to claim 8, **characterised in that** the control means (88) comprises means responsive to the electrical potential difference between the second ends of the strips (60,62) to produce the detection signal in response to the change in electrical potential difference between the second ends of the strips (60,62) when the strips (60,62) are brought into contact by a said obstruction.

10. Apparatus according to any preceding claim, **characterised in that** the conductive strips (60,62) are embedded within an outer covering of flexible material (50) so as to be normally spaced apart within that outer covering and such that a said obstruction moved by the slidable member (8) towards the conductive strips (60,62) is carried by the slidable member (8) into contact with an outer surface of the flexible covering (50) and flexes the latter to bring the strips (60,62) into contact at the corresponding point.

11. Apparatus according to any preceding claim, **characterised in that** the slidable member is a window glass (8) slidable in a window frame (10) which defines the said path.

12. Apparatus according to claim 11, **characterised in that** the conductive strips (60,62) are mounted to extend along at least part of the window frame.

13. Apparatus according to claim 12, **characterised in that** the conductive strips (60,62) form part of or are mounted on the window glass seal (12) on the frame (10).

14. Apparatus according to claim 10, **characterised in that** the slidable member is a window glass (8) slidable in a window frame which defines the said path and in which the flexible material (50) forms part of a window glass seal (12) on the frame (10).

15. Apparatus according to any preceding claim, **characterised in that** the control means (88) includes means (84) responsive to the detection signal for arresting a power drive (74) for sliding the slidable member (8) within the said path.

16. Apparatus according to claim 15, **characterised in that** the control means (88) includes means (96) responsive to the detection signal for energising the power drive (74) to move the slidable member (8) in the opposite direction within the said path and away from the conductive strips (60,62).

17. A window frame for a vehicle window, **characterised in that** it is in combination with apparatus according to any preceding claim.

18. A motor vehicle, **characterised in that** it incorporates a window frame according to claim 17.

## Patentansprüche

1. Vorrichtung, die auf ein Hindernis auf dem Bewegungsweg eines verschiebbaren Elementes (8) anspricht und einen ersten sowie einen zweiten, normalerweise beabstandeten Streifen (60, 62) aus elektrisch leitendem, federndem Material, die eine Kammer (64) dazwischen bilden, eine Einrichtung (50) aus elektrisch isolierendem Material zum Anbringen der Streifen (60, 62) an den Weg angrenzend, so dass ein Hindernis auf dem Weg durch das verschiebbare Element (8) auf die leitenden Streifen (60, 62) zubewegt wird und bewirkt, dass sie an einem entsprechenden Punkt entlang ihrer Länge in Kontakt gebracht werden, eine Steuereinrichtung (88), die in Funktion diesen Kontakt elektrisch erfasst und so das Hindernis registriert und ein Registriersignal erzeugt, eine elektrische Widerstandseinrichtung (91) in der Kammer (64) umfasst, die die zwei elektrisch leitenden Streifen (60, 62) an einer vorgegebenen Position miteinander verbindet, so dass ein vorgegebener elektrischer Strom durch die Streifen (60, 62) fließen kann, wenn sie getrennt werden, und das Auftreten einer elektrischen Trennung in einem der Streifen (60, 62) diesen Strom unterbricht, um ein Fehlersignal zu erzeugen, wobei die elektrische Widerstandseinrichtung behandeltes Elastomermaterial (91) umfasst, und **dadurch gekennzeichnet, dass** die einander gegenüberliegenden Enden der Kammer (64) durch nicht leitende Abschlusskappen (98, 100) verschlossen sind.

2. Vorrichtung nach Anspruch 1, **dadurch gekennzeichnet, dass** die leitenden Streifen (60, 62) behandeltes Elastomermaterial umfassen.

3. Vorrichtung nach Anspruch 2, **dadurch gekennzeichnet, dass** jeder der leitenden Streifen (60, 62) einen entsprechenden elektrischen Leiter (66, 68) enthält, dessen elektrischer Widerstand im Wesentlichen Null beträgt und der in das behandelte Elastomermaterial der Streifen (60, 62) eingebettet ist.

4. Vorrichtung nach Anspruch 3, **dadurch gekennzeichnet, dass** jeder elektrische Leiter einen leitenden Metalldraht (66, 68) umfasst.

5. Vorrichtung nach einem der vorangehenden Ansprüche, **dadurch gekennzeichnet, dass** die Streifen (60, 62) des elektrisch leitenden federnden Materials beabstandet mit einem vorgegebenen Zwischenraum zwischen ihnen angebracht sind und das behandelte Elastomermaterial der elektrischen Widerstandseinrichtung (91) zwischen ihnen und in elektrischem Kontakt mit jedem von ihnen an einem Ende des Zwischenraums angebracht ist.

6. Vorrichtung nach Anspruch 5, **dadurch gekennzeichnet, dass** das behandelte Elastomermaterial der elektrischen Widerstandseinrichtung (91) durch elektrisch leitenden Klebstoff in Position gehalten wird.

7. Vorrichtung nach Anspruch 5 oder 6, **gekennzeichnet dadurch, dass** das behandelte Elastomermaterial der elektrischen Widerstandseinrichtung (91) durch Einspritzen in den Zwischenraum zwischen den leitenden Streifen (60, 62) erzeugt wird.

8. Vorrichtung nach einem der Ansprüche 1 bis 4, **gekennzeichnet dadurch, dass** der erste und der zweite Streifen (60, 62) parallel zueinander und nebeneinander angebracht sind, wobei die elektrische Widerstandseinrichtung (91) ein erstes Ende des ersten Streifens (60) mit einem ersten Ende des zweiten Streifens (66) verbindet, sowie durch eine zweite elektrische Widerstandseinrichtung (87), die mit dem zweiten Ende des ersten Streifens (62) verbunden ist, so dass eine elektrische Potentialdifferenz, die an die zweiten Enden der Streifen (60, 62) über die elektrische Widerstandseinrichtung (87) angelegt wird, den vorgegebenen elektrischen Strom über die Streifen (60, 62) zuführt, wenn sie getrennt werden, so dass Unterbrechung des Stroms durch die elektrische Trennung eine Änderung der elektrischen Potentialdifferenz zwischen den zweiten Enden der Streifen verursacht und das Fehlersignal erzeugt.

9. Vorrichtung nach Anspruch 8, **dadurch gekennzeichnet, dass** die Steuereinrichtung (88) eine Einrichtung umfasst, die auf die elektrische Potentialdifferenz zwischen den zweiten Enden der Streifen (60, 62) anspricht, um das Registriersignal in Reaktion auf die Änderung der elektrischen Potentialdifferenz zwischen den zweiten Enden der Streifen (60, 62) zu erzeugen, wenn die Streifen (60, 62) durch das Hindernis in Kontakt gebracht werden.

10. Vorrichtung nach einem der vorangehenden Ansprüche, **dadurch gekennzeichnet, dass** die leitenden Streifen (60, 62) in eine äußere Umhüllung aus flexiblem Material (50) so eingebettet sind, dass sie normalerweise innerhalb dieser äußeren Umhüllung beabstandet sind, und dass das Hindernis, das durch das verschiebbare Element (8) auf die leitenden Streifen (60, 62) zubewegt wird, von dem verschiebbaren Element (8) mit einer Außenfläche der flexiblen Umhüllung (50) in Kontakt gebracht wird und letztere biegt, um die Streifen (60, 62) an dem entsprechenden Punkt in Kontakt zu bringen.

11. Vorrichtung nach einem der vorangehenden Ansprüche, **dadurch gekennzeichnet, dass** das verschiebbare Element ein Fensterglas (8) ist, das in einem Fensterrahmen (10) verschoben werden kann, der den Weg bildet.

12. Vorrichtung nach Anspruch 11, **dadurch gekennzeichnet, dass** die leitenden Streifen (60, 62) so angebracht sind, dass sie sich entlang wenigstens eines Teils des Fensterrahmens erstrecken.

13. Vorrichtung nach Anspruch 12, **dadurch gekennzeichnet, dass** die leitenden Streifen (60, 62) einen Teil der Fensterglasdichtung (12) an dem Rahmen (10) bilden oder daran angebracht sind.

14. Vorrichtung nach Anspruch 10, **dadurch gekennzeichnet, dass** das verschiebbare Element ein Fensterglas (8) ist, das in einem Fensterrahmen verschoben werden kann, der den Weg bildet, und wobei das flexible Material (50) Teil einer Fensterglasdichtung (12) an dem Rahmen (10) bildet.

15. Vorrichtung nach einem der vorangehenden Ansprüche, **dadurch gekennzeichnet, dass** die Steuereinrichtung (88) eine Einrichtung (84) enthält, die auf das Registriersignal anspricht, um einen Antrieb (74) zum Verschieben des verschiebbaren Elementes (8) auf dem Weg anzuhalten.

16. Vorrichtung nach Anspruch 15, **dadurch gekennzeichnet, dass** die Steuereinrichtung (88) eine Einrichtung (96) enthält, die auf das Registriersignal anspricht, um den Antrieb (74) zu aktivieren und das verschiebbare Element (8) auf dem Weg in der entgegengesetzten Richtung und von den breiten Streifen (60, 62) weg zu bewegen.

17. Fensterrahmen für ein Fahrzeugfenster, **dadurch gekennzeichnet, dass** es eine Kombination mit der Vorrichtung nach einem der vorangehenden Ansprüche bildet.

18. Kraftfahrzeug, **dadurch gekennzeichnet, dass** es einen Fensterrahmen nach Anspruch 17 enthält.

## Revendications

1. Appareil de détection d'obstacles sur le trajet de déplacement d'un élément coulissant (8), comprenant des premières et secondes bandes de matériau élastique électriquement conducteur normalement espacées les unes par rapport aux autres (60, 62) et formant un passage (64) entre elles, des moyens en matériau électriquement isolant (50) pour monter les bandes (60, 62) adjacentes au trajet de manière à ce qu'un obstacle sur le trajet soit déplacé par l'élément coulissant (8) vers les bandes conductrices (60, 62) et pour les amener à venir en contact au niveau d'un point correspondant sur leurs longueurs ; des moyens de commande (88) ayant pour fonction de détecter électriquement un tel contact pour, par là même, détecter l'obstacle et produire un signal de détection ; des moyens de résistance électrique (91) situés dans le passage (64) assurant la connexion entre les deux bandes électriquement conductrices (60, 62) à une position prédéterminée pour, par là même, permettre à un courant électrique prédéterminé de circuler à travers les bandes (60, 62) lorsqu'elles sont séparées de manière à ce que l'apparition d'une discontinuité électrique dans l'une ou l'autre des bandes (60, 62) interrompe ce courant pour produire un signal d'erreur, les moyens de résistance électrique comprenant un matériau élastomère traité (91) ;
et **caractérisé en ce que** les extrémités opposées dudit passage (64) sont fermées par des capuchons d'extrémité non conducteurs (98, 100).

2. Appareil selon la revendication 1, **caractérisé en ce que** les bandes conductrices (60, 62) comprennent un matériau élastomère traité.

3. Appareil selon la revendication 2, **caractérisé en ce que** chacune des bandes conductrices (60, 62) comprend un conducteur électrique respectif (66, 68) d'une résistance électrique sensiblement égale à zéro incrusté dans le matériau élastomère traité des bandes (60, 62).

4. Appareil selon la revendication 3, **caractérisé en ce que** chacun des conducteurs électriques comprend un fil en métal conducteur (66, 68).

5. Appareil selon l'une quelconque des revendications précédentes, **caractérisé en ce que** les bandes (60, 62) de matériau élastique électriquement conducteur sont fixées éloignées les unes des autres par un certain espace, et le matériau élastomère traité des moyens de résistance électrique (91) est monté entre elles et en contact électrique avec chacune d'entre elles au niveau de l'une des extrémités de l'espace.

6. Appareil selon la revendication 5, **caractérisé en ce que** le matériau élastomère traité des moyens de résistance électrique (91) est assuré en position par un adhésif électriquement conducteur.

7. Appareil selon la revendication 5 ou 6, **caractérisé en ce que** le matériau élastomère traité des moyens de résistance électrique (91) est produit par injection dans l'espace entre les bandes conductrices (60, 62).

8. Appareil selon l'une quelconque des revendications 1 à 4, **caractérisé en ce que** les premières et secondes bandes (60, 62) sont fixées parallèlement les unes aux autres et côte à côte, les moyens de résistance électrique (91) assurant la connexion entre une première extrémité de la première bande (60) et une première extrémité de la seconde bande (66), et par des seconds moyens de résistance électrique (87) connectés à la seconde extrémité de la première bande (62) de telle sorte qu'une différence de potentiel électrique appliquée sur la seconde extrémité des bandes (60, 62) à travers les seconds moyens de résistance électrique (87) amène le courant électrique prédéterminé à circuler à travers les bandes (60, 62) lorsqu'elles sont séparées, moyennant quoi toute interruption du courant par une ladite discontinuité électrique provoque un changement dans la différence de potentiel électrique entre les secondes extrémités des bandes pour produire le signal d'erreur.

9. Appareil selon la revendication 8, **caractérisé en ce que** les moyens de commande (88) comprennent des moyens de détection de la différence de potentiel électrique entre les secondes extrémités des bandes (60, 62) pour produire le signal de détection en réponse au changement dans la différence de potentiel électrique entre les secondes extrémités des bandes (60, 62) lorsque les bandes (60, 62) sont amenées en contact par un ledit obstacle.

10. Appareil selon l'une quelconque des revendications précédentes, **caractérisé en ce que** les bandes conductrices (60, 62) sont incrustées à l'intérieur d'un revêtement extérieur en matériau flexible (50) de manière à se trouver normalement espacées les unes des autres à l'intérieur de ce revêtement extérieur, et de telle sorte qu'un ledit obstacle déplacé par l'élément coulissant (8) vers les bandes conductrices (60, 62) est amené en contact par l'élément coulissant (8) avec une surface externe du revêtement flexible (50) et fait plier ce dernier de manière à amener les bandes (60, 62) à venir en contact au niveau du point correspondant.

11. Appareil selon l'une quelconque des revendications précédentes, **caractérisé en ce que** l'élément coulissant est une vitre (8) susceptible de coulisser dans un cadre de vitre (10) qui définit ledit trajet.

12. Appareil selon la revendication 11, **caractérisé en ce que** les bandes conductrices (60, 62) sont fixées de manière à s'étendre au moins le long d'une partie du cadre de la vitre.

13. Appareil selon la revendication 12, **caractérisé en ce que** les bandes conductrices (60, 62) font partie de ou bien sont montées sur le joint de vitre (12) sur le cadre de vitre (10).

14. Appareil selon la revendication 10, **caractérisé en ce que** l'élément coulissant est une vitre (8) susceptible de coulisser dans un cadre de vitre qui définit ledit trajet et dans lequel le matériau flexible (50) fait partie d'un joint de vitre (12) sur le cadre de vitre (10).

15. Appareil selon l'une quelconque des revendications précédentes, **caractérisé en ce que** les moyens de commande (88) comprennent des moyens (84) destinés, en réponse au signal de détection, à arrêter un entraînement électrique (74) pour faire coulisser l'élément coulissant (8) à l'intérieur dudit trajet.

16. Appareil selon la revendication 15, **caractérisé en ce que** les moyens de commande (88) comprennent des moyens (96) destinés, en réponse au signal de détection, à activer l'entraînement électrique (74) pour amener l'élément coulissant (8) à se déplacer dans la direction opposée à l'intérieur dudit trajet et en s'éloignant des bandes conductrices (60, 62).

17. Cadre de vitre pour une vitre de véhicule automobile, **caractérisé en ce qu'**il est en combinaison avec l'appareil selon l'une quelconque des revendications précédentes.

18. Véhicule automobile, **caractérisé en ce qu'**il comprend un cadre de vitre selon la revendication 17.
